# EUROPEAN PATENT APPLICATION

(11) **EP 3 780 360 A1**
(43) Date of publication of application: **17.02.2021**
(21) Application number: 19775826.1
(22) Date of filing: 21.03.2019
(51) Int. Cl.: H02K 9/06

(54) **DYNAMO ELECTRICAL MACHINE FOR INTERNAL COMBUSTION ENGINE, AND ROTOR FOR SAME**

(30) Priority: 27.03.2018 JP 2018059818
(71) Applicant: Densotrim Co., Ltd., Mie 510-1222 (JP); HONDA MOTOR CO., LTD., Minato-ku Tokyo 107-8556 (JP)
(72) Inventor: FUJIMURA Kazuo, Mie-gun Mie 510-1222 (JP); TANAKA Ryouichi, Mie-gun Mie 510-1222 (JP); YANAGISAWA Takeshi, Wako-shi Saitama 351-0193 (JP)
(74) Representative: TBK
(86) International application number: PCT/JP2019/011942
(87) International publication number: WO 2019/188734

(57) **Abstract**

A rotor 21 has a rotor core 22. The rotor core 22 has a cylindrical outer cylinder 22b and a bottom plate 22c that extends to one end of the outer cylinder 22b. The bottom plate 22c has a through hole 22e penetrating the bottom plate 22c. The rotor 21 has a partition member 28. The partition member 28 divides the through hole 22e into a first region 22h and a second region 22i. The partition member 28 crosses over the through hole 22e. The rotary electric machine uses a flow in the first region 22h and a flow in the second region 22i.

## Description

### [CROSS REFERENCE TO RELATED APPLICATIONS]

The present application claims the benefit of priority from Japanese Patent Application No. 2018-059818 filed in Japan filed on March 27, 2018, the entire disclosure of the above application is incorporated herein by reference.

### [TECHNICAL FIELD]

The disclosure in this specification relates to a rotary electric machine for an internal combustion engine and its rotor.

### [BACKGROUND]

Patent Literatures 1 and 2 disclose a rotary electric machine for an internal combustion engine and a rotor thereof. The rotary electric machine for an internal combustion engine includes a fan. The contents of literatures listed as the citation list are incorporated by reference as explanation of technical elements in this specification.

### [CITATION LIST]

### [PATENT LITERATURE]

[Patent Document 1] JPS59-35547A
[Patent Literature 2] JP2001-45714A

### [SUMMARY OF INVENTION]

In the configuration of Patent Literature 1, a fan component is provided inside a rotary electric machine. The fan produces a flow inside a rotary electric machine, especially a rotor. On the other hand, Patent Literature 2 introduces a flow of mist containing oil from an outside of the rotor. In rotary electric machines for internal combustion engines, efficient generation of flow is required. In the above aspects, or in other aspects not mentioned, there is a need for further improvements in a rotary electric machine for an internal combustion engine and its stator.

It is an object of this disclosure to provide a rotary electric machine for an internal combustion engine and a rotor that efficiently generate a flow by components arranged inside a rotor.

A rotor of a rotary electric machine for an internal combustion engine disclosed herein comprising: a rotor core (22) having a cylindrical outer cylinder (22b) and a bottom plate (22c) extending on one end of the outer cylinder and having a through hole (22e) penetrating the bottom plate; and a partition member (28) which is arranged inside the outer cylinder and crosses the through hole so as to partition the through hole into a first region (22h) and a second region (22i).

The rotor of the disclosed rotary electric machine for an internal combustion engine generates a flow through the through hole by the partition member. The partition member partitions the through hole into the first region and the second region. The partition member produces a flow in the first region and also produces a flow in the second region. The rotor can utilize the flow in the first region and the flow in the second region. As a result, the rotor of a rotary electric machine for the internal combustion engine that efficiently generates a flow by the partition member arranged inside the rotor is provided.

The rotary electric machine for an internal combustion engine disclosed herein includes the rotor (21) and a stator (31) facing the rotor.

The disclosed aspects in this specification adopt different technical solutions from each other in order to achieve their respective objectives. Reference numerals in parentheses described in claims and this section exemplarily show corresponding relationships with parts of embodiments to be described later and are not intended to limit technical scopes. The objects, features, and advantages disclosed in this specification will become apparent by referring to following detailed descriptions and accompanying drawings.

### [BRIEF DESCRIPTION OF DRAWINGS]

[FIG. 1] FIG. 1 is a cross-sectional view of a rotary electric machine according to a first embodiment.
[FIG. 2] FIG. 2 is a plan view of the inside of a rotor.
[FIG. 3] FIG. 3 is a partial cross sectional view of the rotor.

### [DESCRIPTION OF EMBODIMENT]

Hereinafter, a plurality of embodiments will be described with reference to the drawings. In some embodiments, parts which are functionally and/or structurally corresponding and/or associated are given the same reference numerals, or reference numerals with different hundreds digit or higher digits. For corresponding parts and/or associated parts, additional explanations can be made to the description of other embodiments.

### First Embodiment

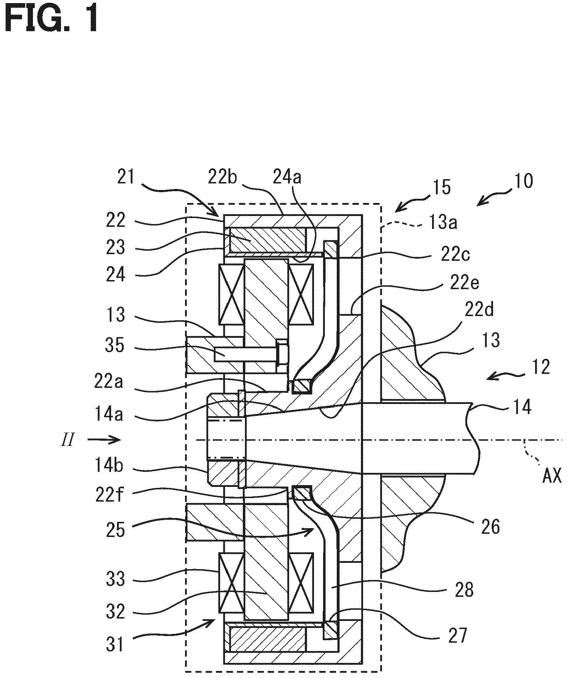

FIG. 1 shows a schematic structure of a rotary electric machine for an internal combustion engine. An internal combustion engine system 10 includes an internal combustion engine (engine 12) and a rotary electric machine for the internal combustion engine (hereinafter, simply referred to as a rotary electric machine 15). An example of applications of the rotary electric machine 15 is a generator driven by the engine 12. In this case, the rotary electric machine 15 supplies electric power to a plurality of electric loads including a battery. The usage of the rotary electric machine 15 may be a generator motor. In this case, the rotary electric machine 15 functions as both a generator and an electric motor. In this case, the rotary electric machine 15 functions as a starter motor for starting the engine 12, for example.

The engine 12 has a member 13. The body 13 is provided by a crankcase or a cover of the engine 12. The body 13 defines an accommodation chamber 13a for accommodating the rotary electric machine 15. The accommodation chamber 13a is a dry cavity filled with air or a wet cavity in which air and lubricating oil or air and cooling liquid are mixed. The rotary electric machine 15 radiates heat to the fluid in the accommodation chamber 13a. The fluid includes air, lubricating oil, and/or cooling liquid. The engine 12 has a rotary shaft 14. The rotary shaft 14 is provided by a crankshaft or a shaft that interlocks with the crankshaft. The rotary shaft 14 is connected to the rotary electric machine 15.

The rotary electric machine 15 is linked to the engine 12 by being mounted on the engine 12. The engine 12 is a vehicle engine mounted on a vehicle or a general-purpose engine. Here, the term vehicle should be interpreted in a broad sense, and includes moving objects such as vehicles, ships, and aircrafts, and fixed objects such as amusement equipment and simulation equipment. The general-purpose engine can be used, for example, as a generator and a pump. In this embodiment, the engine 12 is mounted on a saddle-ride type vehicle.

The rotary electric machine 15 is assembled to the body 13 and the rotary shaft 14. The rotary electric machine 15 is an outer rotor type rotary electric machine. The rotary electric machine 15 includes a rotor 21 and a stator 31. In the following description, the term "axial direction" refers to a direction along a central axis AX when the rotor 21, the stator 31, or the stator core 32 is regarded as a cylinder. In the following description, the term "radial direction" refers to a radial direction when the rotor 21, the stator 31, or the stator core 32 is regarded as a cylinder.

The rotor 21 is a field element. The rotor 21 is entirely cup-shaped. The rotor 21 is fixed to the end portion of the rotary shaft 14. The rotor 21 rotates together with the rotary shaft 14. The rotor 21 has a cup-shaped rotor core 22. The rotor 21 has a permanent magnet 23 disposed on an inner surface of the rotor core 22. The rotor 21 provides a rotating magnetic field by the permanent magnet 23. The permanent magnet 23 is provided by a plurality of arc-shaped magnets. The rotor 21 has a holder 24 for fixing the permanent magnet 23. The permanent magnet 23 may be fixed by an adhesive.

The rotor core 22 is connected to the rotary shaft 14. The rotary shaft 14 has an outer surface 14a for receiving the rotor core 22. The outer surface 14a is a tapered surface that is tapered off. The rotor core 22 and the rotary shaft 14 are connected via a positioning mechanism in a rotational direction such as key fitting. The rotor core 22 is fastened and fixed to the rotary shaft 14 by a nut 14b that is a fixing member. The rotor core 22 provides a yoke for a permanent magnet to be described later. The rotor core 22 is made of a magnetic metal.

The rotor core 22 includes an inner cylinder 22a, an outer cylinder 22b, and a bottom plate 22c. The inner cylinder 22a is connected to the rotary shaft 14. The inner cylinder 22a provides a boss portion. The outer cylinder 22b is a circular cylindrical shape. The outer cylinder 22b is located on a radial direction outside of the inner cylinder 22a and away from the inner cylinder 22a. The outer cylinder 22b supports the permanent magnet 23 on the inner surface. The bottom plate 22c is an annular plate. The bottom plate 22c extends on one end of the outer cylinder. The bottom plate 22c extends between the inner cylinder 22a and the outer cylinder 22b.

The inner cylinder 22a has a through hole that receives the rotary shaft 14. The inner cylinder 22a has an inner surface 22d. The inner surface 22d is a tapered surface that contacts the outer surface 14a. In this embodiment, the inner cylinder 22a, the outer cylinder 22b, and the bottom plate 22c are integrally formed of a continuous material. The inner cylinder 22a, the outer cylinder 22b, and the bottom plate 22c may be provided by a plurality of members. For example, the boss portion that provides the inner cylinder 22a may be provided by another member and connected by a connecting member such as a rivet.

The bottom plate 22c has a through hole 22e. The through hole 22e communicates the inside and the outside of the rotor 21 in a cup shape. The through hole 22e is located on the radial direction outside out of the annular range provided by the bottom plate 22c. The through hole 22e is open to the inside of the rotor 21 at one end. The other end of the through hole 22e is open only in the axial direction end surface of the bottom plate 22c.

The holder 24 is a cup-shaped member. The holder 24 extends over among from the end surface of the permanent magnet 23 to the inner surface of the permanent magnet 23 and the inner surface of the bottom plate 22c. The holder 24 is fixed to the bottom plate 22c by a fixing member such as a rivet. The holder 24 fixes the permanent magnet 23 to the rotor core 22. The holder 24 provides a radial direction inner surface 24a. The radial direction inner surface 24a is also the inner surface of the rotor 21. The holder 24 is made of thin non-magnetic metal.

The holder 24 is formed so as not to cover the through hole 22e. The holder 24 may have a through hole corresponding to the through hole 22e. As a result, the through hole 22e is recognized as a hole in the rotor 21 as well as a hole in the rotor core 22. The through hole 22e communicates the inside and outside of the rotor 21.

The stator 31 is an armature element. The stator 31 is an annular member. The stator 31 is an outer salient pole type stator. The stator 31 is fixed to the body 13. The stator 31 has a through hole that can receive the rotary shaft 14 and the inner cylinder 22a. The stator 31 has an outer peripheral surface opposed to the inner surface of the rotor 21 via a gap.

The stator 31 has a stator core 32. The stator core 32 is disposed inside the rotor 21. The stator core 32 is fixed to body 13. A shape of the stator core 32 is characterized by an annular portion provided on a radial direction inside and a plurality of teeth (salient poles) provided on a radial direction outside.

The stator 31 has a stator coil 33 attached to a stator core 32. The stator coil 33 is attached to a part of the stator core 32. The stator coil 33 is wound around the stator core 32. The stator coil 33 provides a single-phase winding or a multi-phase winding. The stator coil 33 is disposed on radial direction outside teeth of the stator core 32. The stator coil 33 provides an armature winding. The stator core 32 is fixed to the body 13 by bolts 35 that are fixing members. The bolt 35 passes through the stator core 32. The bolt 35 fixes the stator core 32 to a cover of the body 13. The bolt 35 may be regarded as a part of the rotary electric machine 15 or a part of the engine 12.

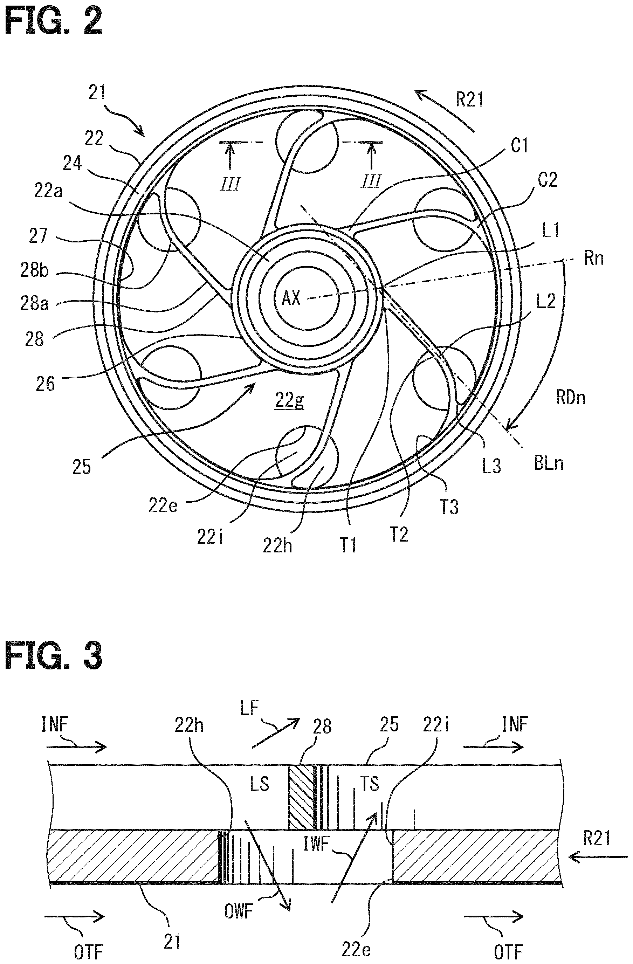

FIG. 2 is a plan view of the rotor 21 in the direction of arrow II in FIG. 1. The arrow R21 is the rotation direction R21 of the rotor 21. In the following description, a leading side of an object with respect to the direction of the rotation direction R21 may be referred to as a forward direction, and a trailing side of the object with respect to the rotation direction R21 may be referred to as a backward direction. The positions of the plurality of through holes 22e in the rotor 21 are illustrated relatively accurately.

The rotor 21 has a plurality of through holes 22e. The plurality of through holes 22e are arranged at equal intervals. The plurality of through holes 22e are dispersively arranged apart from each other on the axial direction inner surface of the rotor 21. The axial direction inner surface of the rotor 21 extends between the two through holes 22e that are adjacent to each other in the circumferential direction. The through hole 22e is positioned on a radial direction outside on the axial direction inner surface of the rotor 21. The through hole 22e is close to the radial direction inner surface 24a of the rotor 21. The through hole 22e is clearly separated from the inner cylinder 22a. The axial direction inner surface of the rotor 21 extends between the inner cylinder 22a and the through hole 22e. There is a limited axial direction inner surface between the radial direction inner surface 24a and the through hole 22e. An edge of the through hole 22e may be in contact with the radially inner surface 24a. The through hole 22e is a circular hole.

Returning to FIG. 1, the rotary electric machine 15 has a fan 25. The fan 25 has an inner ring 26, an outer ring 27, and a partition member 28 extending between the inner ring 26 and the outer ring 27. The partition member 28 crosses over the through hole 22e so as to partition the through hole 22e. The partition member 28 is also called a bridging portion, a blade, or a rib.

The partition member 28 has an inner ring connecting portion C1 that connects the inner ring 26 and the partition member 28, and an outer ring connecting portion C2 that connects the outer ring 27 and the partition member 28. The inner ring connecting portion C1 is also called a first connecting portion. The outer ring connecting portion C2 is also called a second connecting portion. The inner ring connecting portion C1 and the outer ring connecting portion C2 are offset in the rotation direction R21. That is, the through hole 22e is positioned between the inner ring connecting portion C1 and the outer ring connecting portion C2.

The inner ring 26 is fixed by a flange 22f formed on the inner cylinder 22a. The fan 25 can be fixed to the rotor 21 by various fixing mechanisms such as caulking by the flange 22f, adhesion, and press fitting. The fan 25 extends from the inner cylinder 22a along the axial direction inner surface of the rotor 21. The fan 25 reaches a radially outer side edge of the axial direction inner surface of the rotor 21 via the axial direction inner surface of the rotor 21. The fan 25 is a part of the rotor 21. The fan 25 is made of resin. The fan 25 may be made of metal such as aluminum.

In FIG. 2, the fan 25 has a plurality of partition members 28. The plurality of partition members 28 are arranged at equal intervals. The plurality of partition members 28 are dispersively arranged apart from each other on the axial direction inner surface of the rotor 21.

The one partition member 28 extends outward from the inner ring 26 in the radially outer side. The partition member 28 extends from the inner ring 26 in parallel with the tangential direction of the inner ring 26. The partition member 28 has a straight portion 28a and a curved portion 28b. The straight portion 28a occupies a radial direction inside portion rather than the curved portion 28b. The curved portion 28b occupies a radial direction outside portion rather than the straight portion 28a. The curved portion 28b is curved so as to be curled in the backward direction. The partition member 28 reaches the outer ring 27 after passing through the straight portion 28a and the curved portion 28b.

The partition member 28 has a sweepback angle RDn. The sweepback angle RDn is an inclination angle of the partition member 28 with respect to the radial direction. The partition member 28 is inclined with respect to the radial direction so as to gradually recede backward in the rotational direction R21 from the radial direction inside toward the radial direction outside. It is possible to assume a partition member axis BLn as a center of one partition member 28. Here, a center of the straight portion 28a of the partition member 28 is the partition member axis BLn. Further, it is possible to assume a radial direction axis Rn passing through an intersection of the inner ring 26 and one partition member 28. In this case, the sweepback angle RDn of the partition member 28 is indicated by an arrow. The curved portion 28b is bent rearward from the partition member 28 in the rotation direction R21. In other words, the center defining the curved portion 28b is located behind the partition member 28 in the rotation direction R21. The partition member 28 extends from the inner ring 26 toward the outer ring 27 with the sweepback angle RDn. The sweepback angle RDn may be defined by the straight portion 28a and the curved portion 28b as a whole. Also in this case, the partition member 28 has the sweepback angle.

The partition member 28 has a front edge that is the leading side in the rotation direction R21 and a rear edge that is the trailing side in the rotation direction R21. The front edge extends between an inner end point L1 on the radial direction inside and an outer end point L3 on the radial direction outside. The front edge is curved so as to be convex toward the front in the rotation direction R21. The front edge has a boundary point L2 between the straight portion 28a and the curved portion 28b. The rear edge extends between an inner end point T1 on the radial direction inside and an outer end point T3 on the radial direction outside. The rear edge is curved so as to be concave toward the front in the rotation direction R21. The rear edge has a boundary point T2 between the straight portion 28a and the curved portion 28b.

The partition member 28 is arranged within the rotor 21. The partition member 28 is arranged on the bottom plate 22c inside the outer cylinder 22b. The plurality of partition members 28 are in contact with the surface inside the rotor 21, for example, the surface of the bottom plate 22c. The partition member 28 is arranged on the surface of the bottom plate 22c that faces the stator 31.

The plurality of partition members 28 are radially arranged at equal intervals. The plurality of partition members 28 are arranged at the same angular intervals as the plurality of through holes 22e. The plurality of partition members 28 are arranged in a spiral shape gradually expanding from the inner cylinder 22a to the outer cylinder 22b along the rotation direction of the rotor 21. All the partition members 28 have the same shape.

A cavity 22g corresponding to an axial direction height of the partition member 28 is defined between the two partition members 28 adjacent to each other in the circumferential direction. The cavity 22g is fan-shaped. The cavity 22g gradually moves in the backward direction as it is towards from a radial direction inner end to a radial direction outer end. Since the partition member 28 has the sweepback angle RDn, the partition member 28 generates a flow along the partition member 28 gradually from the radial direction inside toward the radial direction outside. The flow includes various fluid flows such as a case of air, a case of a mixture containing oil, and a case of liquid.

One partition member 28 is arranged so as to partition one through hole 22e. The partition member 28 is arranged so as to pass through substantially the center of the through hole 22e. The partition member 28 is arranged so that the curved portion 28b is positioned above the through hole 22e. The partition member 28 is arranged so that the curved portion 28b is mainly positioned above the through hole 22e. At least one partition member 28 crosses over at least one through hole 22e. At least one partition member 28 partitions one through hole 22e. The partition member 28 is arranged so as to partition the through hole 22e into a first region 22h and a second region 22i. The first region 22h and the second region 22i are in communication with the fluid. The partition member 28 obliquely crosses over the through hole 22e while being inclined with respect to the radial direction. The partition member 28 diagonally crosses over the through hole 22e while extending in the backward direction on the through hole 22e. The boundary points L2 and T2 are located on the through hole 22e. All of the plurality of partition members 28 partition the plurality of through holes 22e. All of the plurality of through holes 22e are partitioned by a plurality of partition members 28. Each of the plurality of partition members 28 crosses over each of the plurality of through holes 22e.

The partition member 28 is continuously formed from the inner cylinder 22a to the outer cylinder 22b. The partition member 28 is arranged so as to straddle over the through hole 22e. Further, the partition member 28 is also arranged inside the rotor 21 on the side surface facing the stator 31. It is desirable that the partition members 28 be arranged in this manner. As a result, an interaction with the air described later occurs.

The first region 22h is located forward of the second region 22i with respect to the rotation direction R21. Therefore, the first region 22h is also called a leading region. The second region 22i is located backward of the first region 22h with respect to the rotation direction R21. Therefore, the second region 22i is also called a trailing region. An area of the first region 22h is smaller than an area of the second region 22i. A difference in area contributes to the generation of a pressure difference described later.

Since the partition member 28 has the sweepback angle RDn, the characteristic shapes of the first region 22h and the second region 22i can be obtained in the through hole 22e. In particular, the through hole 22e is divided into the first region 22h and the second region 22i by the curved portion 28b having a large sweepback angle. As a result, the first region 22h is located outside rather than the second region 22i with respect to the radial direction. Therefore, the first region 22h is also called an outside region. The second region 22i is located inside rather than the first region 22h with respect to the radial direction. Therefore, the second region 22i is also called an inside region. The sweepback angle RDn gives the through hole 22e not only the characteristic shape of the leading region and the trailing region but also the characteristic shape of the outside region and the inside region.

FIG. 3 shows a schematic cross section taken along the line III-III in FIG. 2. Here, the bottom plate 22c and the fan 25 are illustrated. When the rotor 21 rotates in the rotation direction R21, the air outside the rotor 21 flows as the outer flow OTF, and the air inside the rotor 21 flows as the inner flow INF. The partition member 28 generates a rising flow LF that flows so as to avoid the partition member 28. At this time, the pressure increases on the leading side LS of the partition member 28. A pressure drop occurs at the trailing side TS of the partition member 28.

The partition member 28 is positioned so as to partition the through hole 22e into the first region 22h and the second region 22i. The partition member 28 generates an outward flow OWF passing through the through hole 22e and an inward flow IWF. On the leading side LS, an outward flow OWF that goes from the inside of the rotor 21 to the outside thereof occurs. At the trailing side TS, an inward flow IWF is generated from the outside of the rotor 21 toward the inside. This promotes the flow of fluid through the through hole 22e. The flow of the fluid promotes heat dissipation of the rotor 21 and heat dissipation of the stator 31.

Further, due to the characteristic shapes of the outer region and the inner region, the partition member 28 generates a component inclined in the radial direction. The first region 22h, which is the outer region, gradually transitions radial direction outside along the partition member 28. Due to the sweepback angle RDn, the partition member 28 generates a flow toward from the radial direction inside to the radial direction outside. The partition member 28 produces an outward flow OWF that is inclined from the radial direction inside to the radial direction outside. The outward flow OWF in the first region 22h promotes discharge from the radial direction inside of the rotor 21 to the radial direction outside.

The second region 22i, which is the inner region, gradually transitions radial direction outside along the partition member 28. Due to the sweepback angle RDn, the partition member 28 generates a flow toward from the radial direction inside to the radial direction outside. The partition member 28 produces an inward flow IWF that is inclined from the radial direction inside to the radial direction outside. The inward flow IWF in the second region 22i promotes introduction from the radial direction inside of the rotor 21 to the radial direction outside.

As a result, a flow is generated in which the outward flow OWF is discharged to the outside in the radial direction and the inflow IWF is taken from the inside in the radial direction. This flow suppresses a short circuit between the outward flow OWF and the inward flow IWF in one through hole 22e. This promotes the flow of fluid through the through hole 22e. The flow of the fluid promotes heat dissipation of the rotor 21 and heat dissipation of the stator 31.

### Other Embodiments

The disclosure in this specification, the drawings, and the like is not limited to the illustrated embodiments. The disclosure encompasses the illustrated embodiments and variations thereof by those skilled in the art. For example, the present disclosure is not limited to the combinations of components and/or elements shown in the embodiments. The present disclosure may be implemented in various combinations. The present disclosure may have additional portions which may be added to the embodiments. The present disclosure encompasses omission of the components and/or elements of the embodiments. The present disclosure encompasses the replacement or combination of components and/or elements between one embodiment and another. The disclosed technical scope is not limited to the description of the embodiment. Several technical scopes disclosed are indicated by descriptions in the claims and should be understood to include all modifications within the meaning and scope equivalent to the descriptions in the claims.

The above embodiment includes the fan 25 made of resin. Alternatively, the fan 25 may be made of metal. The fan 25 is preferably a non-magnetic material. The fan 25 made of a non-magnetic material prevents leakage of magnetic flux, and also suppresses iron loss in the fan 25 due to the leakage magnetic flux. The fan 25 may also be provided by the holder 24. For example, a raised portion corresponding to the partition member 28 may be formed in a part of the holder 24. Further, the holder 24 may be insert-molded on the resin fan 25.

In the above embodiment, the plurality of through holes 22e are arranged at equal angular intervals. Further, the plurality of through holes 22e are equidistant from the central axis AX. Alternatively, the plurality of through holes 22e may be arranged at unequal intervals. Further, the plurality of through holes 22e may be dispersed with respect to the distance from the central axis AX. For example, the plurality of through holes 22e may be alternately different in distance from the central axis AX.

The partition member 28 may divide the through hole 22e. In other words, the partition member 28 only needs to traverse the through hole 22e, and various modifications can be made with ribs or fins. In the above embodiment, the curved portion 28b is mainly arranged on the through hole 22e. Alternatively, the straight portion 28a and the curved portion 28b may be arranged on the through hole 22e. Further, only the curved portion 28b may be arranged on the through hole 22e. Further, only the straight portion 28a may be arranged on the through hole 22e.

In the above embodiment, the plurality of partition members 28 and the plurality of through holes 22e are associated with each other in a one-to-one relationship. This configuration contributes to high efficiency. Alternatively, there may be a through hole 22e in which the partition member 28 is not arranged. Further, there may be a partition member 28 that is not arranged on the through hole 22e. In addition, the through hole 22e may include a plurality of through holes having different diameters.

## Claims

1. A rotor of a rotary electric machine for an internal combustion engine, comprising:
a rotor core (22) having a cylindrical outer cylinder (22b) and a bottom plate (22c) extending on one end of the outer cylinder and having a through hole (22e) penetrating the bottom plate; and
a partition member (28) which is arranged inside the outer cylinder and crosses the through hole so as to partition the through hole into a first region (22h) and a second region (22i).

2. The rotor of a rotary electric machine for an internal combustion engine claimed in claim 1, wherein
the first region is a leading region located forward of the second region with respect to a rotation direction (R21) of the rotor, and
the second region is a trailing region located backward of the first region with respect to a rotation direction (R21) of the rotor.

3. The rotor of a rotary electric machine for an internal combustion engine claimed in claim 1 or 2, wherein
the first region is an outer region located outside the second region with respect to a radial direction of the rotor, and
the second region is an inner region located inside the first region with respect to the radial direction of the rotor.

4. The rotor of a rotary electric machine for an internal combustion engine claimed in any one of claims 1 to 3, wherein
the partition member crosses the through hole obliquely with respect to a radial direction of the rotor.

5. The rotor of a rotary electric machine for an internal combustion engine claimed in claim 4, wherein
the partition member extends at a sweepback angle (RDn) with respect to a rotation direction of the rotor.

6. The rotor of a rotary electric machine for an internal combustion engine claimed in any one of claims 1 to 5, wherein
the partition member has a straight portion (28a) and a curved portion (28b), and wherein
the straight portion is arranged so as to occupy a radial direction inside than the curved portion, and wherein
the curved portion is arranged so as to occupy a radial direction outside than the straight portion.

7. The rotor of a rotary electric machine for an internal combustion engine claimed in claim 6, wherein
the curved portion is arranged on the through hole.

8. The rotor of a rotary electric machine for an internal combustion engine claimed in any one of claims 1 to 7, further comprising:
a plurality of the through holes, and a plurality of the partition members, wherein
each of the plurality of partition members crosses each of the plurality of through holes.

9. The rotor of a rotary electric machine for an internal combustion engine claimed in any one of claims 1 to 8, wherein
the partition member is provided as a part of a fan (25) having an inner ring (26) and an outer ring (27), extends between the inner ring and the outer ring, and is made of resin.

10. The rotor of a rotary electric machine for an internal combustion engine claimed in any one of claims 1 to 9, wherein
an area of the first region (22h) is smaller than an area of the second region (22i).

11. A rotary electric machine for an internal combustion engine, comprising:
a rotor (21) claimed in any one of claims 1 to 10; and
a stator (31) facing the rotor.
